(19) Europäisches Patentamt
European Patent Office
Office européen des brevets

(11) **EP 3 158 660 B1**

(12) **EUROPEAN PATENT SPECIFICATION**

(45) Date of publication and mention of the grant of the patent:
**21.08.2019 Bulletin 2019/34**

(21) Application number: **14895300.3**

(22) Date of filing: **19.06.2014**

(51) Int Cl.:
*H04J 11/00* (2006.01)    *H04B 17/345* (2015.01)
*H04L 1/20* (2006.01)    *H04B 17/336* (2015.01)

(86) International application number:
**PCT/SE2014/050762**

(87) International publication number:
**WO 2015/195015 (23.12.2015 Gazette 2015/51)**

(54) **A NETWORK NODE AND A METHOD THEREIN FOR CONFIGURING INTERFERENCE SIGNAL TRANSMISSIONS FROM TRANSMISSION POINTS IN A RADIO COMMUNICATIONS NETWORK**

NETZWERKKNOTEN UND VERFAHREN ZUR KONFIGURATION VON INTERFERENZSIGNALÜBERTRAGUNGEN VON ÜBERTRAGUNGSPUNKTEN IN EINEM FUNKKOMMUNIKATIONSNETZ

NOEUD DE RÉSEAU ET PROCÉDÉ ASSOCIÉ POUR CONFIGURER DES TRANSMISSIONS DE SIGNAUX D'INTERFÉRENCE À PARTIR DE POINTS DE TRANSMISSION DANS UN RÉSEAU DE COMMUNICATION RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.04.2017 Bulletin 2017/17**

(73) Proprietor: **Telefonaktiebolaget LM Ericsson (publ)**
**164 83 Stockholm (SE)**

(72) Inventors:
• **SANDBERG, Sara**
**S-975 96 Luleå (SE)**
• **BURSTRÖM, Per**
**974 43 Lulea (SE)**

(74) Representative: **Zacco Sweden AB**
**P.O. Box 5581**
**114 85 Stockholm (SE)**

(56) References cited:
**WO-A1-2013/133653    US-A1- 2013 029 657**
**US-A1- 2013 322 376**

• **MOTOROLA MOBILITY: "CQI Definition for CoMP", 3GPP DRAFT; R1-123791 - CQI DEFINITION FOR COMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao; 20120813 - 20120818 5 August 2012 (2012-08-05), XP050661644, Retrieved from the Internet: URL:http://www.3gpp.org/ftp/tsg_ran/WG1_RL 1/TSGR1_70/Docs/ [retrieved on 2012-08-05]**
• **ERICSSON ET AL: "CoMP Network Operation Utilizing UE Emulated Interference", 3GPP DRAFT; R1-123826, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20120813 - 20120817 5 August 2012 (2012-08-05), XP050661679, Retrieved from the Internet: URL:http://www.3gpp.org/ftp/tsg_ran/WG1_RL 1/TSGR1_70/Docs/ [retrieved on 2012-08-05]**
• **'Proposed signalling information supporting eCoMP with NIB;' 3RD GENERATION PARTNERSHIP PROJECT (3GPP); R1-140168 page 3, XP050735729**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

Embodiments herein relate to interference signal transmissions in a radio communications network. In particular, embodiments herein relate to a network node and a method therein for configuring interference signal transmissions from transmission points in a radio communications network.

BACKGROUND

In a typical radio communications network, wireless devices, also known as mobile stations, terminals and/or User Equipments, UEs, communicate via a Radio Access Network, RAN, to one or more core networks. The RAN covers a geographical area which is divided into cell areas, with each cell area being served by a base station, e.g. a radio base station, RBS, or network node, which in some networks may also be called, for example, a "NodeB" or "eNodeB". A cell is a geographical area where radio coverage is provided by the radio base station at a base station site or an antenna site in case the antenna and the radio base station are not collocated. Each cell is identified by an identity within the local radio area, which is broadcast in the cell. Another identity identifying the cell uniquely in the whole mobile network is also broadcasted in the cell. One base station may have one or more cells. A cell may have downlink and/or uplink traffic. The base stations communicate over the air interface operating on radio frequencies with the user equipments within range of the base stations.

A Universal Mobile Telecommunications System, UMTS, is a third generation mobile communication system, which evolved from the second generation, 2G, Global System for Mobile Communications, GSM. The UMTS terrestrial radio access network, UTRAN, is essentially a RAN using wideband code division multiple access, WCDMA, and/or High Speed Packet Access, HSPA, for user equipments. In a forum known as the Third Generation Partnership Project, 3GPP, telecommunications suppliers propose and agree upon standards for third generation networks and UTRAN specifically, and investigate enhanced data rate and radio capacity. In some versions of the RAN as e.g. in UMTS, several base stations may be connected, e.g., by landlines or microwave, to a controller node, such as a radio network controller, RNC, or a base station controller, BSC, which supervises and coordinates various activities of the plural base stations connected thereto. The RNCs are typically connected to one or more core networks.

Specifications for the Evolved Packet System, EPS, have been completed within the 3rd Generation Partnership Project, 3GPP, and this work continues in the coming 3GPP releases. The EPS comprises the Evolved Universal Terrestrial Radio Access Network, E-UTRAN, also known as the Long Term Evolution, LTE, radio access, and the Evolved Packet Core, EPC, also known as System Architecture Evolution, SAE, core network. E-UTRAN/LTE is a variant of a 3GPP radio access technology wherein the radio base station nodes are directly connected to the EPC core network rather than to RNCs. In general, in E-UTRAN/LTE the functions of a RNC are distributed between the radio base stations nodes, e.g. eNodeBs in LTE, and the core network. As such, the Radio Access Network, RAN, of an EPS has an essentially "flat" architecture comprising radio base station nodes without reporting to RNCs.

In LTE, a wireless device may estimate the effective channel that the received signals are traversing by measuring on a reference signal, i.e. a signal transmitted on Channel State Information Reference Signals, CSI-RS, resources defined in LTE. The effective channel may comprise the radio propagation channel, antenna gains, and any possible antenna virtualizations. For antenna virtualization, a CSI-RS port may be precoded so that it is virtualized over multiple physical antenna ports, that is, the CSI-RS port may be transmitted on multiple physical antenna ports, possibly with different gains and phases. Other resources may be configured for a wireless device to measure interference on, such as, for example, CSI-Interference Management, CSI-IM, resources defined in LTE. Here, a number of transmission points may be transmitting on these CSI-IM resources and the received signal power in the wireless device may therefore be used as a measurement of the interference from these transmission points. Thus, the wireless device may estimate the effective channel and interference. The wireless device then reports in a CSI report a transmission configuration suitable for the measured effective channel and interference, thus implicitly giving the radio base station information about the underlying channel state.

In LTE, the transmission configuration in the CSI report is specified in terms of Channel Quality Indicator(s) (CQI), a Rank Indicator (RI), and a Pre-coder Matrix Indicator (PMI). RI corresponds to a recommended number of streams that are to be spatially multiplexed and thus transmitted in parallel over the effective channel, whereas the PMI identifies a recommended pre-coder, normally present in a codebook, for the transmission, which relates to the spatial characteristics of the effective channel.

The CQI represents a recommended Modulation and Coding Scheme, MCS. It should be noted that a wireless device may, for example, report one out of 16 different CQI values representing 16 different MCS. The wireless device may also report the highest CQI value that has target Block Error Rate, BER, less than 10%. Thus, since the Signal-to-Interference-plus-Noise Ratio, SINR, of the spatial stream(s) over which the transmission occurs directly effects the target BER, there is thus a relationship between the CQI and the SINR of the spatial stream(s) over which the transmission occurs. Thus, the SINR of the spatial stream(s) may be transparent to the radio base station via the reported CQI.

In 3GPP LTE Release 11, CSI processes are defined such that each CSI process is associated with a CSI-RS resource and a CSI-IM resource, see e.g. 3GPP TS 36.213 V11.4.0, 2013-09, Sections 7.2.5-7.2.6. A wireless device may be configured with multiple, e.g. up to three or perhaps even six, CSI processes.

In uncoordinated systems, i.e. wherein each transmission point, TP, or cell independently performs transmissions to the wireless devices located within its range, the wireless device may effectively measure the interference observed from other TPs or cells using wideband interference information, such as, for example, Reference Signal Received Power (RSRP). This may then be reported to the network and serve as the relevant interference level for upcoming data transmissions to the wireless device.

In coordinated systems, i.e. wherein multiple TPs or cells may schedule and perform coordinated transmissions to the wireless devices located within their combined range, the network may to a large extent control the TPs or cells that are interfering with a particular TPs transmission to one or more wireless devices. Hence, there will here be multiple different interference hypotheses which will depend on which TPs or cells that are transmitting data transmission and when.

The network may thus use the multiple CSI processes that are configured for the one or more wireless devices to test different interference hypothesis simultaneously for one or more wireless devices. Then, based on the effects of the different interference hypotheses, which are reported back to the network node by the wireless device in the CSI reports, the network node may adapt its downlink scheduling of future transmissions to the one or more wireless devices.

Related arts within this technical field are disclosed, for example:

MOTOROLA MOBILITY: "CQI Definition for CoMP", 3GPP DRAFT; R1-123791 relates to channel quality indicator, CQI, definition for coordinated multipoint, CoMP. The document discusses CQI reporting for different CSI measurement scenarios.

ERICSSON ET AL: "CoMP Network Operation Utilizing UE Emulated Interferance", 3GPP DRAFT; R1-123826, which discusses, UE interface emulation that enables the network to configure a UE for CSI reporting.

US 2013/029657 A1 that relates to a method and system for access and uplink power control for a wireless system having multiple transmit points.

However, for large coordinated networks comprising many TPs and thus challenging scenarios with many strong interfering TPs, the network may require feedback corresponding to many different interference hypotheses. Depending on the coordination scheme, the number of different interference hypotheses to test may be as many as $2^N$ for N number of interfering TPs. Thus, since it is impossible to test all possible different interference hypotheses using the limited CSI resources available, there is a problem in determining which interference hypotheses/scenario to test.

SUMMARY

It is an object of embodiments herein to improve the efficiency of interference measurements in a radio communications network.

According to a first aspect of embodiments herein, the object is achieved by a method performed by a network node for configuring interference signal transmissions from transmission points, TPs, in a radio communications network. The network node obtains estimates indicative of the interference received by one or more wireless devices from the TPs. Then, the network node determines an interference impact value for at least one TP which correspond to the estimates indicative of the interference received by the one or more wireless devices from the at least one TP in relation to the estimates indicative of the interference received by the one or more wireless devices from other TPs of the TPs than the at least one TP. The interference impact value, K, for the at least one TP is determined by calculating for each of the one or more wireless devices (121, 122, 123, 124), a ratio of the estimates indicative of the interference received by one wireless device (121) from the at least one TP (B) to the sum of the estimates indicative of the interference received by the same wireless device (121) from other TPs (C, D, E, F) of the TPs (B, C, D, E, F) than the at least one TP (B) and adding together the calculated ratios. After the determining, the network node configures interference signal transmissions from the TPs based on the at least one interference impact value.

According to a second aspect of embodiments herein, the object is achieved by a network node for configuring interference signal transmissions from TPs in a radio communications network. The network node is configured to obtain estimates indicative of the interference received by one or more wireless devices from the TPs. Also, the network node is configured to determine an interference impact value for at least one TP which correspond to the estimates indicative of the interference received by the one or more wireless devices from the at least one TP in relation to the estimates indicative of the interference received by the one or more wireless devices from other TPs of the TPs than the at least one TP. The interference impact value, K, for the at least one TP is determined by calculating for each of the one or more wireless devices (121, 122, 123, 124), a ratio of the estimates indicative of the interference received by one wireless device (121) from the at least one TP (B) to the sum of the estimates indicative of the interference received by the same wireless device (121) from other TPs (C, D, E, F) of the TPs (B, C, D, E, F) than the at least one TP (B) and adding together the calculated ratios. The network node is further configured to configure interference signal transmissions from the TPs based on the at least one interference impact value.

According to a third aspect of embodiments herein, the object is achieved by a computer program, comprising instructions which, when executed on at least one processor, cause the at least one processor to carry out the method described above. According to a fourth aspect of embodiments herein, the object is achieved by a carrier containing the computer program described above, wherein the carrier is one of an electronic signal, optical signal, radio signal, or computer readable storage medium.

By determining an interference impact value for interfering TPs in a radio communications network as described above, the network node is able to arrange the interfering TPs in a decreasing order of importance in terms of caused interference and configure interfering signal transmissions from the interfering TPs in order to test the most important interference scenarios as soon as possible. This will avoid the network node from spending time and interference signal transmission resources on testing less important interference scenarios. Consequently, the efficiency of interference measurements in the radio communications network will be improved.

BRIEF DESCRIPTION OF THE DRAWINGS

Features and advantages of the embodiments will become readily apparent to those skilled in the art by the following detailed description of embodiments thereof with reference to the accompanying drawings, wherein:

Figure 1      is a schematic block diagram illustrating embodiments of network nodes in a radio communications network,

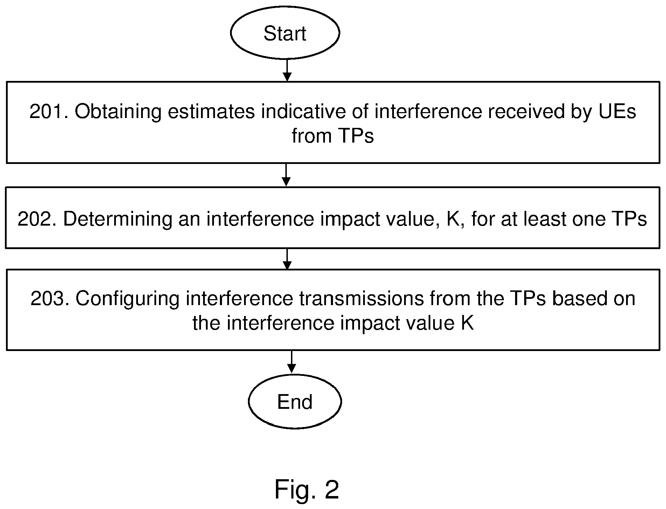

Figure 2      is a flowchart depicting embodiments of a method in a network node,

Figure 3      is a schematic block diagram depicting a first interference scenario in a cell in a radio communications network,

Figure 4A     is a schematic table illustrating the result according to prior art for the first interference scenario depicted in Figure 3,

Figure 4B     is a schematic table illustrating the result of embodiments of a method in a network node for the first interference scenario depicted in Figure 3,

Figure 5      is a schematic block diagram depicting a second interference scenario in a cell in a radio communications network,

Figure 6      is a schematic table illustrating the result of embodiments of a method in a network node for the second interference scenario depicted in Figure 5,

Figure 7A-B   is schematic tables illustrating the result of embodiments of a method in a network node for the second interference scenario depicted in Figure 5,

Figure 8      is a schematic block diagram depicting embodiments of a network node.

DETAILED DESCRIPTION

The figures are schematic and simplified for clarity, and they merely show details which are used for the understanding of the embodiments presented herein, while other details have been left out. Throughout, the same reference numerals are used for identical or corresponding parts or steps.

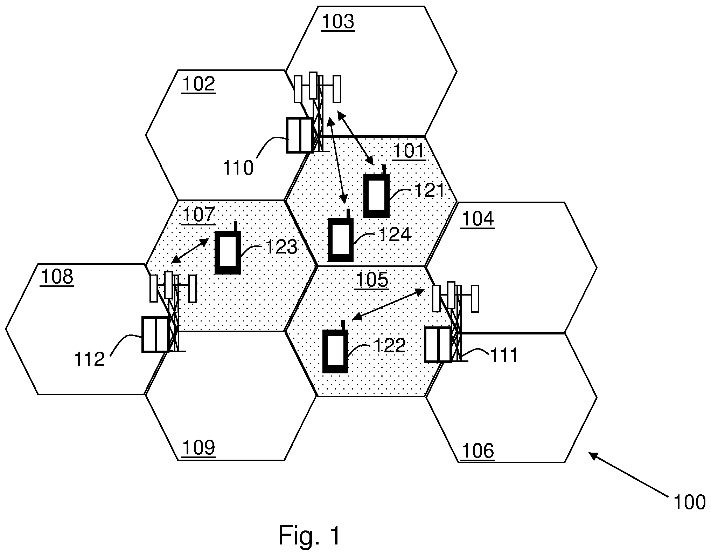

**Figure 1** shows an example of a **radio communications network 100** in which embodiments herein may be implemented. Although illustrated in Figure 1 as an LTE network, the radio communications network 100 may be any wireless communication system, such as, LTE-Advanced, Wideband Code Division Multiple Access (WCDMA), Global System for Mobile communications/Enhanced Data rate for GSM Evolution (GSM/EDGE), Worldwide Interoperability for Microwave Access (WiMax), Ultra Mobile Broadband (UMB) or GSM network, or other 3GPP cellular network or system. The radio communications system 100 comprises the network nodes 110-112.

Each of the network nodes 110-112 may e.g. be an eNB, eNodeB, or a Home Node B, a Home eNode B, femto Base Station (BS), pico BS or any other network unit capable to serve a user equipment or a machine type communication device in the radio communications system 100. The network nodes 110-112 may also be e.g. a base station controller, a network controller, a relay node, a repeater, an access point, a radio access point, a Remote Radio Unit (RRU) or a Remote Radio Head (RRH). Furthermore, the network nodes 110-112 each comprise one or more antennas for wireless radio communication with wireless devices located within their coverage range; that is, each of the network nodes 110-112 may use one or more of its antennas to provide radio coverage within its cells. The network nodes 110-112, or one or more of its antennas or cells, may be referred to herein a transmission point, TP.

A cell may be seen as a geographical area where radio coverage is provided by radio base station equipment at a base station site or at remote locations in Remote Radio Units (RRU). The cell definition may also incorporate frequency bands and radio access technology used for transmissions, which means that two different cells may cover the same geographical area but using different frequency bands. Each cell is identified by an identity within the local radio area, which is broadcast in the cell. Another identity identifying each cell uniquely in the whole radio communication network 100 may also broadcasted in the cell. The network node 110 communicates over the air or radio interface operating on radio frequencies with the wireless devices within range of the network node 110.

A **first, second, third and fourth wireless device 121, 122, 123, 124** is located within the cells 101, 105 and 107. For example, each of the first, second, third and fourth wireless device 121, 122, 123, 124 are configured to communicate within the radio communications network 100 via the network nodes 110, 111, 112 over a radio link when present in the cell 101, 105, 107 served by the network nodes 110, 111, 112, respectively. The first, second, third and fourth wireless device 121, 122, 123, 124 may e.g. be any kind of wireless device such as a mobile phone, a cellular phone, a Personal Digital Assistant (PDA), a smart phone, a tablet, a sensor equipped with a wireless device, Laptop Mounted Equipment (LME) (e.g. USB), Laptop Embedded Equipment (LEE), Machine Type Communication (MTC) device, a wireless device with D2D capability, Customer Premises Equipment (CPE), etc.

In the example shown in Figure 1, the **network nodes 110-112** are each configured to provide wireless radio coverage to wireless devices in each of its **cells 101-103, 104-106, 107-109, respectively.** The network nodes 110-112 may be connected and configured to communicate with each other, e.g. by signalling over an X2 connection.

The network nodes 110-112 may also be configured to provide coordinated transmissions to wireless devices, e.g. the first, second, third and fourth wireless device 121, 122, 123, 124, located within a specific coordinated area, e.g. cells 101, 105 and 107 in Figure 1 (as shown by dotted area). This means that one or more TPs of each of the network nodes 110-112 may provide coordinated transmissions to the first, second, third and fourth wireless devices 121, 122, 123, 124. The network nodes 110-112 corresponding to this coordination area may be referred to as a coordinated cluster or Coordinated Multi Point, CoMP, cluster. The coordination area may be served by any number of coordinated antennas, cells and/or sectors of the network nodes 110-112. Coordinated transmissions may be performed by the network nodes 110-112 in order to increase the spectral efficiency in the radio communications network and thus increase the system throughput.

However, as mentioned in the background above, if the coordination area is large, the number of different interference hypotheses that are of interest to measure may get very large, and thus making it impossible to test them all using the available inference measurement resources, e.g. CSI-IM resources. Due to this limitation in number of available interference measurement resources, it is important to measure the interfering TPs and hypotheses which have the largest relevance and impact on system performance. It may be noted that RSRP information may be used instead of the CSI reports from CSI processes, but will not be as accurate.

This issue is addressed by the embodiments herein by determining interference impact values for the interfering TPs and configuring the interference signal transmissions from the interfering TPs based on these interference impact values. Thus, the interference hypotheses to test are coordinated according to each interfering TP's impact on the performance of the wireless device in relation to the impact of the other interfering TPs.

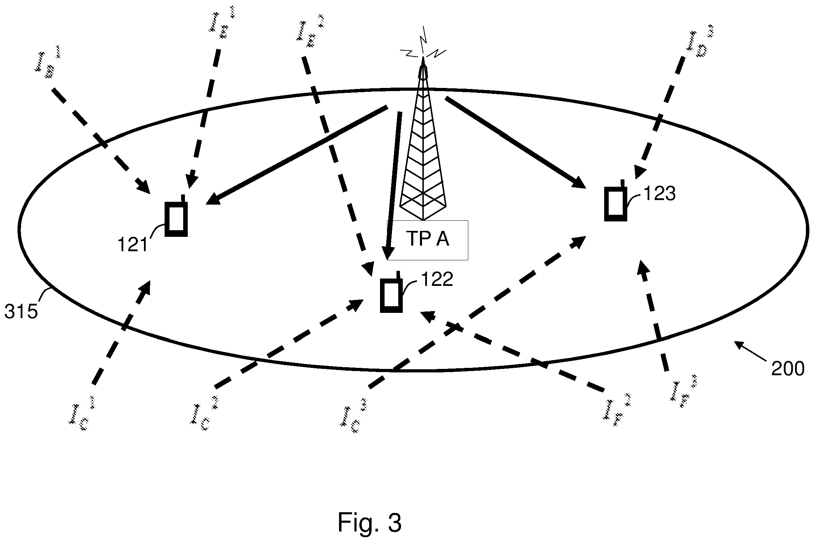

Example of embodiments of a method performed by a network node 110 for configuring interference signal transmissions from TPs in a radio communications network 100, will now be described with reference to the flowchart depicted in Figure 3. According to the example shown in Figure 1, the TPs may, for example, be any transmission points of the network nodes 110, 111, 112 configured to provide coordinated transmissions within a coordinated area, e.g. cells 101, 105 and 107 in Figure 1 (as shown by dotted area).

**Figure 3** is an illustrated example of actions or operations which may be taken by the network node 110. However, it should also be noted that these actions or operations may also be performed by a centralized network node in the radio communications network 100, such as, e.g. a core network node, a radio network controller, a Radio Resource Management, RRM, server, an Operations Support System, OSS, node or the like. The centralized network node may also be e.g. an eNB controlling distributed Remote Radio Units, RRUs, via e.g. a Common Public Radio Interface, CPRI, or an eNB controlling radio heads over an active Distributed Antenna System, DAS, network. The method may comprise the following actions.

**Action 201**

The network node 110 obtains estimates indicative of the interference received by one or more wireless devices from the transmission points, TPs.

In some embodiments, the obtained estimates indicative of the interference may be based on measurement values of signals from the TPs determined and reported by the one or more wireless devices. For example, the obtained estimates indicative of the interference may here be estimated by the network node 110 from RSRP reports from the one or more wireless devices. In some embodiments, the obtained estimates indicative of the interference may be path loss measurement values measured by the network node 110 on uplink signals from the one or more wireless devices. For example, the obtained estimates indicative of the interference may here be estimated by the network node 110 from uplink Sounding Reference Signal, SRS, transmissions. Alternatively, according to some embodiments, the obtained estimates indicative of the interference may be Signal-to-Interference-plus-Noise-Ratios, SINRs, determined by the network node 110 based on Channel Quality Indicators, CQIs, received from the one or more wireless devices in CSI reports. For example, the obtained estimates indicative of the interference may here be estimated by the network node 110 from existing CSI measurements sent by the one or more wireless devices.

**Action 202**

After obtaining the estimates, the network node 110 determines an interference impact value, K, for at least one TP. The interference impact value, K, correspond to the estimates indicative of the interference received by the one or more wireless devices from the at least one TP in relation to the estimates indicative of the interference received by the one or more wireless devices from other TPs of the TPs than the at least one TP. The determined interference impact values, K, will thus estimate the impact of turning a particular TP on or off, and thus indicate the importance of measuring specific interference hypotheses.

It should also be noted that the interference impact values, K, may be calculated for one or more wireless devices located in a cell being a part of a coordinated area, e.g. one or more of the first and fourth wireless devices 121, 124 in cell 101 in Figure 1, the second wireless device 122 in cell 105, and/or the third wireless device 123 in cell 107. Since the specific interference hypotheses for which interference signal transmissions from the TPs may be configured based on these interference impact values, K, , as described below in Action 203, these specific interference hypotheses may also be referred to as "cell-centric" interference hypotheses. This is because these "cell-centric" interference hypotheses may be seen as coordinating the interference measurements made by the wireless devices in each cell separately.

For the sake of simplicity and to show how this may be performed in more detail, **Figure 3** illustrate a first interference scenario in a cell 315 in a radio communications network 200 is illustrated.

In this first interference scenario, the first, second and third wireless devices 121, 122, 123 are located in the cell 315 served by transmission point A, i.e. TP A. The interference, I, from surrounding TPs, i.e. TPs B, C, D, E and F, received by the first, second and third wireless devices 121, 122, 123 is shown by the dashed arrows. The first wireless device 121 receives the interference $I_B^1$ from TP B, the interference $I_C^1$ from TP C, and the interference $I_E^1$ from TP E. The second wireless device 122 receives the interference $I_C^2$ from TP C, the interference $I_E^2$ from TP E, and the interference $I_F^2$ from TP F. The third wireless device 123 receives the interference $I_C^3$ from TP C, the interference $I_D^3$ from TP D, and the interference $I_F^3$ from TP F.

This first interference scenario shows a typical case wherein the first, second and third wireless devices 121, 122, 123 within the same cell 315 have some common interfering TPs and some unique interfering TPs, and thus, have different interference hypotheses that are most important to measure on. For example, the received interference power, i.e. the obtained estimates indicative of the interference, of an interfering TP $M$ on a wireless device $k$, $I_M^k$, may be used directly for ranking the TPs.

However, in order to determine the "cell-centric" interference hypotheses, the interference impact of the interference from all TPs must first be assessed and compared.

For example, the interference impact from TP B on the first wireless device 121 located in the cell 315 in Figure 3 may be determined according to Eq. 1:

$$\frac{I_B^1}{\sum_{i \neq B} I_i^1} \qquad \text{(Eq. 1)}$$

where $I_B{}^1$ is the interference power received by the first wireless device 121 from TP B, e.g. an obtained estimate indicative of the interference caused by the TP B, and the denominator is a sum of interference power from TPs other than TP B, e.g. an obtained estimate indicative of the interference caused by the TPs C, D, E and F. That is, the interference impact is estimated by the interference power relative to the interference power received from other TPs.

In some embodiments, the network node 110 may determine the interference impact value, K, for the at least one TP, e.g. TP B, by adding together, for each of the one or more wireless devices, e.g. the three wireless devices 121, 122, 123, the relation between the estimates indicative of the interference received by one wireless device 121 from the at least one TP, e.g. TP B, and the estimates indicative of the interference received by the same wireless device 121 from other TPs, e.g. TPs C, D, E, and F, of the TPs than the at least one TP, e.g. TP B . In other words, the total interference impact of each interfering TP B, C, D, E, and F, i.e. the interference impact value K, may be calculated as a sum of the interference impact on each of the first, second and third wireless devices 121, 122, 123.

For example, the interference impact value $K_C{}^A$ of the interfering TP C on the first, second and third wireless devices 121, 122, 123 in cell 315 served by the TP A may be determined according to Eq. 2:

$$K_C{}^A = \frac{I_C{}^1}{\sum\limits_{i \neq C} I_i{}^1} + \frac{I_C{}^2}{\sum\limits_{i \neq C} I_i{}^2} + \frac{I_C{}^3}{\sum\limits_{i \neq C} I_i{}^3} \qquad \text{(Eq. 2)}$$

where $I_C{}^1$ is the interference power received by the first wireless device 121 from TP C, $I_C{}^2$ is the interference power received by the second wireless device 122 from TP C, and $I_C{}^3$ is the interference power received by the third wireless device 122 from TP C. The denominators are the sum of interference power from TPs other than TP C for first, second and third wireless devices 121, 122, 123, respectively.

In some embodiments, this sum may be a weighted sum, wherein the weights may, for example, account for if a cell is active or not during a determined or pre-set time period; this, such that certain periodically recurring transmission patterns are handled by not giving priority to measuring silent TPs. Alternatively, another aspect for which the weights may account for is how old the existing estimates indicative of the interference are; this, such that an interference impact or metric that have not been measured recently may be weighted by, for example, the mean age of the measurements.

In some embodiments, the interference impact may be determined using a rate metric that takes own signal strength, i.e. the power of transmissions signals from the TP A, into account. This may be the case when the obtained estimate is indicative of the interference caused by the TP B.

In this case, the interference impact, or rate metric, from TP B on the first wireless device 121 located in the cell 315 in Figure 3 at full load may be determined according to Eq. 3:

$$\frac{Rate\ for\ wirless\ device\ 121\ with\ TP\ B\ turned\ off}{Rate\ for\ wireless\ device\ 121\ with\ TP\ B\ turned\ on} \sim \frac{\log\left(1 + \frac{S}{\sum_{i \neq B} I_i^1}\right)}{\log\left(1 + \frac{S}{\sum_i I_i^1}\right)} \qquad \text{(Eq. 3)}$$

where the summation index $i$ runs over all interfering TPs detected by the wireless device 121, e.g. TP B, C and E in the first scenario of Figure 3.

In this case, the interference impact value $K_C{}^A$ of the interfering TP C on the first, second and third wireless devices 121, 122, 123 in cell 315 served by the TP A may be determined according to Eq. 4:

$$K_C^A = \frac{\log\left(1 + \frac{S^1}{\sum_{i \neq C} I_i^1}\right)}{\log\left(1 + \frac{S^1}{\sum_i I_i^1}\right)} + \frac{\log\left(1 + \frac{S^2}{\sum_{i \neq C} I_i^1}\right)}{\log\left(1 + \frac{S^2}{\sum_i I_i^2}\right)} + \frac{\log\left(1 + \frac{S^3}{\sum_{i \neq C} I_i^1}\right)}{\log\left(1 + \frac{S^3}{\sum_i I_i^3}\right)} \qquad \text{(Eq. 4)}$$

When the interference impact value $K_B{}^A$, $K_C{}^A$, $K_D{}^A$, $K_E{}^A$, $K_F{}^A$ of each interfering TP B, C, D, E, and F in the cell 315 served by TP A has been determined for the first, second and third wireless devices 121, 122, 123, the "cell-centric" interference hypotheses may be determined.

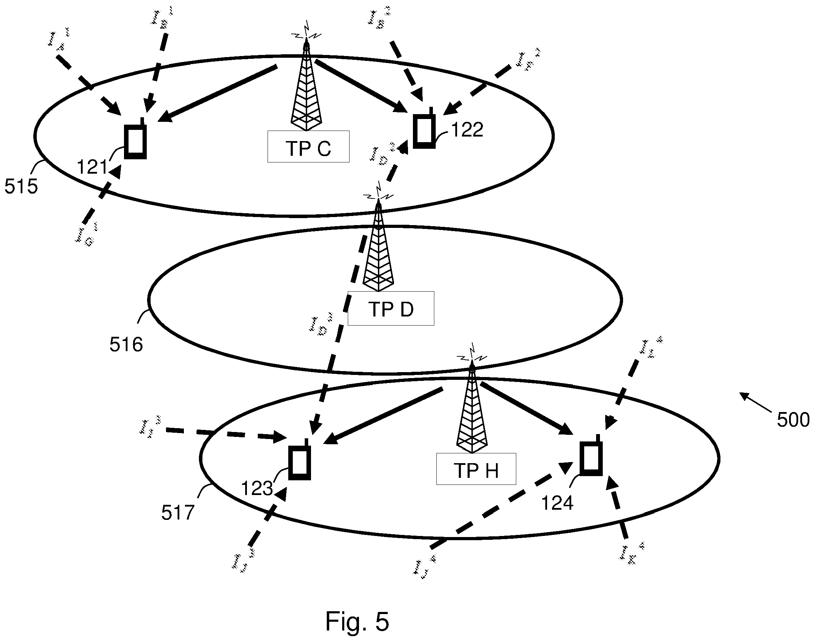

It should be noted that an advantage of these determined interference impact values, K, is that they also enable comparisons of the importance of measuring certain interference hypotheses across multiple cells. This is described in more detail with reference to Figure 5-10 below.

**Action 203**

When the at least one interference impact values have been determined, the network node 110 configures interference signal transmissions from the TPs based on the at least one interference impact value, K.

This advantageously allows the network node 110 to order a possibly very large number of interference hypotheses, which the network node 110 may benefit from having information about, in terms of decreasing importance; that is, the determined interference impact values, K, allows a ranking of the interference hypotheses according to the relative importance of the interfering TPs. This means that the network node 110 is able to test the important interference hypotheses as soon as possible, or only the important interference hypotheses, and avoid spending CSI resources on less important interference hypotheses.

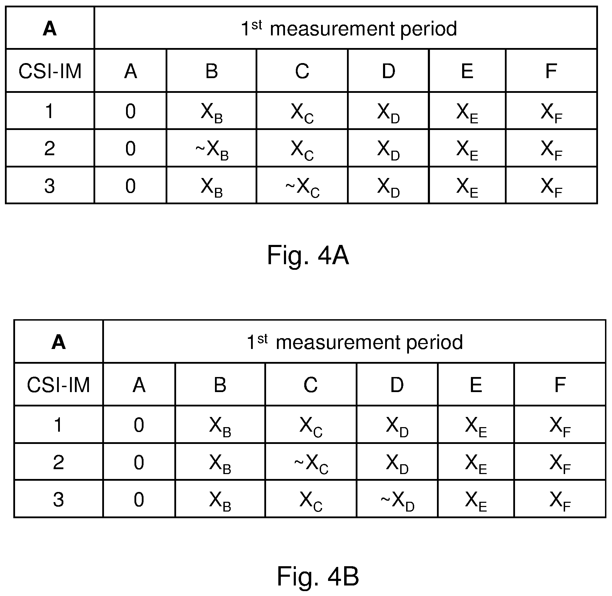

The result of the configuring of interference signal transmissions from the TPs based on the at least one interference impact value, K, according to the embodiments herein is further illustrated by Figures 4A and 4B.

It should be noted that in Figures 4A-B, it is assumed that three CSI-IM resources, CSI-IM 1-3, are allocated for the cell 315 served by TP A, and that each of the first, second and third wireless devices 121, 122, 123 in the cell 315 measures on three CSI processes corresponding to these three CSI-IM resources. Also, the first CSI-IM resources are used to capture the so-called traffic hypothesis; that is, TP A is turned off, i.e. not transmitting on the first CSI-IM resource, CSI-IM 1, while TPs B, C, D, E, and F will follow the current traffic for transmissions on the CSI-IM 1. Any remaining CSI processes, i.e. in this case the second and third CSI-IM resources, CSI-IM 2 and 3, may be used to assess the separate impact of interfering TPs, through measurements where the considered interfering TP has changed state as compared to the traffic hypothesis.

It should also be noted that the period of time during which one interference hypothesis is measured on the CSI-IM resources is denoted as a measurement period. The measurement period may, for example, comprise multiple CSI reporting periods, wherein a CSI reporting period is the time between the receptions of CSI reports at the network node 110. Using several measurement periods to measure different interference hypotheses may be referred to herein as time multiplexing.

Furthermore, the notations $X_B$, $X_C$, $X_D$, $X_E$ and $X_F$ may describe the most likely state, i.e. on or off, of the TP B, C, D, E, and F. The notation $\sim X_B$ is short for $Not(X_B)$, i.e. is the other state than the most likely state.

**Figure 4A** shows a schematic table for a first measurement period illustrating the interference hypothesis selected by according to prior art for the first interference scenario illustrated in Figure 3.

Here, the interference hypothesis for assessing the separate impact of the interfering TP B and TP C are selected, i.e. the second and third CSI-IMs, CSI-IM 2 and 3, are used to identify the separate interference contributions from TP B and TP C, respectively, for the first measurement period. Assuming that the interfering TPs B, C, D, E, and F, are ranked in a decreasing order of strength based on RSRP information, the strongest interfering TPs, i.e. TP B and TP C, may here be selected.

**Figure 4B** shows a schematic table for a first measurement period illustrating the interference hypothesis selected according to the embodiments herein for the first interference scenario illustrated in Figure 3. As described above these may be referred to as "cell-centric" interference hypotheses.

It is assumed here that the interference impact value $K_B^A$, $K_C^A$, $K_D^A$, $K_E^A$, $K_F^A$ of each interfering TP B, C, D, E, and F in the cell 315 served by TP A determined for the first, second and third wireless devices 121, 122, 123, has the relation as indicated in Eq. 5:

$$ K_C{}^A > K_D{}^A > K_F{}^A > K_E{}^A > K_B{}^A \qquad \text{(Eq. 5)} $$

This indicates that the interference contributions from TP B does not have the strongest impact of the first, second and third wireless devices 121, 122, 123 in the cell 315, as indicated by the RSRP information in Figure 4B.

Thus, the interference hypothesis for assessing the separate impact of the interfering TP C and TP D may be selected instead, since these TPs will have a largest impact of the first, second and third wireless devices 121, 122, 123 in the cell 315. Thus, the second and third CSI-IMs, CSI-IM 2 and 3, are used to identify the separate interference contributions from TP C and TP D, respectively, for the first measurement period. It should also be noted that interference contributions from the interfering TPs F, E and B with smaller interference impact values, i.e. less total impact, may be identified in later measurement periods.

Hence, the network node 110 may configure interference signal transmissions from the TPs based on the at least one interference impact values, so as to assess the TP with the largest interference impact values. Furthermore, it should be noted that the scheduled interference signal transmissions may be said to be operative to cause a specific interference signal transmission pattern from the TPs on interference signal transmission resources, i.e. the CSI-IM resources, configured for one or more wireless devices.

As described further below, this may also be extended to multiple cells, and provide a robust solution when coordinating interference signal transmissions for multiple cells. For example, in coordination area or cluster of cells, e.g. cells 101, 105, 107 in Figure 1, with typically different "cell-centric" hypotheses, the interdependency between the hypotheses needs to be taken care of for a number of situations. Therefore, by ranking the impact of the interferers in the different cells, as described in by the embodiment above, the interference hypotheses that give information about the interfering TP with the largest impact may be selected.

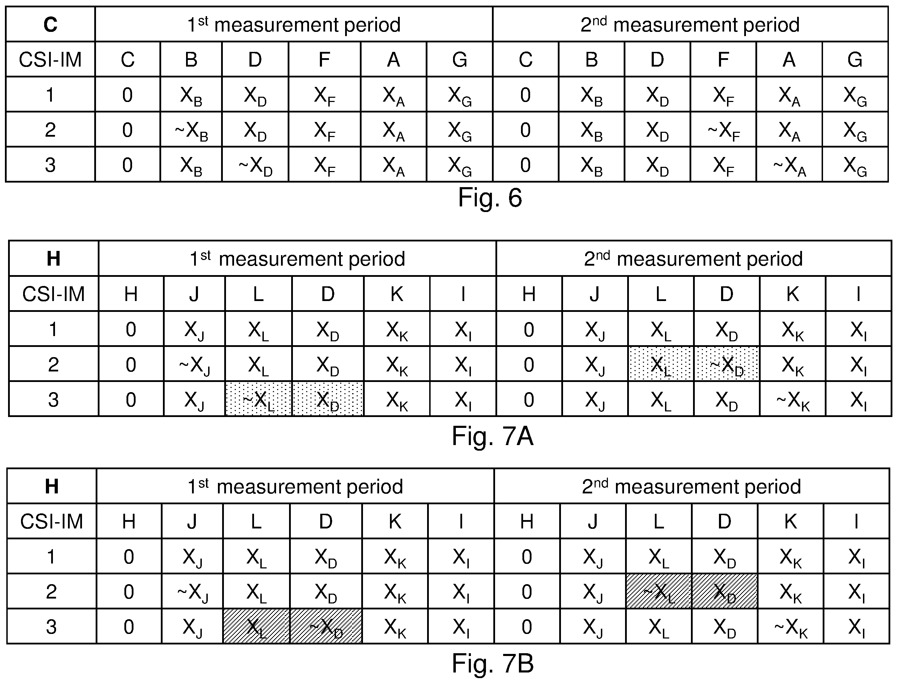

For the sake of simplicity and to show how this may be performed in more detail, **Figure 5** illustrates a second interference scenario in cells 515, 516, 517 in a radio communications network 500. The cells 515, 516, 517 may be part of the same coordination area or cluster of cells, and may also share the same CSI-IM resources, e.g. CSI-IM 1-3 as shown in Figures 6-7B.

In this second interference scenario, the first and second wireless devices 121, 122 are located in the cell 515 served by TP C. The first wireless device 121 receives the interference $I_A{}^1$ from TP A, the interference $I_B{}^1$ from TP B, and the interference $I_G{}^1$ from TP G. The second wireless device 122 receives the interference $I_B{}^2$ from TP B, the interference $I_F{}^2$ from TP F, and the interference $I_D{}^2$ from TP D. Furthermore, in this second interference scenario, the third and fourth wireless devices 123, 124 are located in the cell 517 served by TP H. The third wireless device 123 receives the interference $I_I{}^3$ from TP I, the interference $I_J{}^3$ from TP J, and the interference $I_D{}^3$ from TP D. The fourth wireless device 124 receives the interference $I_J{}^4$ from TP J, the interference $I_L{}^4$ from TP L, and the interference $I_E{}^4$ from TP E.

Here, it is noted that both the second wireless device 122 and the third wireless device 123 will receive interference from the TP D, i.e. $I_D{}^2$ and $I_D{}^3$, respectively. This means that there are two cells 515, 517 with different cell-centric hypotheses, but one common strong interfering TP, i.e. TP D, that share the same CSI-IM resources. This will cause interdependency problems since the same three CSI-IM resources are used for cell 515 served by TP C and 517 served by TP H and the decision of the state of interfering TP D should thus be coordinated.

**Figures 6, 7A and 7B** show schematic tables for a first and second measurement period illustrating the interference hypothesis selected according to the embodiments herein for the second interference scenario illustrated in Figure 5.

It is assumed here that the interference impact value $K_A{}^C$, $K_B{}^C$, $K_D{}^C$, $K_F{}^C$, $K_G{}^C$ of each interfering TP A, B, D, F, and G in the cell 515 served by TP C determined for the first and second wireless devices 121, 122, has the relation as indicated in Eq. 6:

$$K_B{}^C > K_D{}^C > K_F{}^C > K_A{}^C > K_G{}^C \qquad \text{(Eq. 6)}$$

In the "cell-centric" interference hypotheses case for cell 515 served by the TP C, the interference hypothesis for assessing the separate impact of the interfering TP B and TP D may be selected. Thus, the second and third CSI-IMs, CSI-IM 2 and 3, may be used to identify the separate interference contributions from TP B and TP D, respectively, for the first measurement period, as shown in Figure 6. Then, if the time multiplexing is used, i.e. further measurement periods, the interference hypothesis for assessing the separate impact of the interfering TP F and TP A may be selected in the following measurement period. Thus, the second and third CSI-IMs, CSI-IM 2 and 3, may be used to identify the separate interference contributions from TP F and TP A, respectively, for the second measurement period, as shown in Figure 6.

It is further assumed here that the interference impact value $K_D{}^H$, $K_I{}^H$, $K_J{}^H$, $K_K{}^H$, $K_L{}^H$ of each interfering TP D, I, J, K, and L in the cell 517 served by TP H determined for the first and second wireless devices 121, 122, has the relation as indicated in Eq. 7:

$$K_J{}^H > K_L{}^H > K_D{}^H > K_K{}^H > K_I{}^H \qquad \text{(Eq. 7)}$$

In the "cell-centric" interference hypotheses case for cell 517 served by the TP H, the interference hypothesis for assessing the separate impact of the interfering TP J and TP L may be selected. Thus, the second and third CSI-IMs, CSI-IM 2 and 3, may be used to identify the separate interference contributions from TP J and TP L, respectively, for the first measurement period, as shown in Figure 7A. Then, if the time multiplexing is used, i.e. further measurement periods, the interference hypothesis for assessing the separate impact of the interfering TP D and TP K may be selected in the following measurement period. Thus, the second and third CSI-IMs, CSI-IM 2 and 3, may be used to identify the separate interference contributions from TP D and TP K, respectively, for the second measurement period, as shown in Figure 7A.

However, as can be seen, since both cell 515 served by TP C and cell 517 served by TP H have TP D as a strong interfering TP, they may indicate different on/off state for the interfering TP D within the same CSI-IM resource for the same measurement period. Namely, in the first measurement period, the "cell-centric" hypotheses for cell 515 served by TP C state that TP D should follow the traffic in CSI-IM 1 and 2, but change state in CSI-IM 3, as shown in Figure 6; this, while the "cell-centric hypotheses" for cell 517 served by TP H state that TP D should follow the traffic in all three CSI-IMs, CSI-IM 1-3.

In order to resolve this interdependency, the network node 110 may, in some embodiments, configure interference signal transmissions by comparing interference impact values, K, of at least two TPs, and configuring interference signal transmissions from the TPs according to the largest of the determined interference impact values, K. This means that the cell where the common interfering TP has the largest impact decide on the state of the interfering TP.

For example, if assuming that $K_D^C > K_D^H$, that is, the impact of the interference from TP D is larger in cell 515 served by TP C than in cell 517 served by TP H, then this will result in new coordinated interference hypotheses for cell 517 served by TP H as shown by the dashed areas in Figure 7B as compared to the dotted areas in Figure 7A; that is, the states that are changed compared to the "cell-centric" hypotheses as shown by the dotted areas in Figure 7A are marked with dashed areas in Figure 7B. Since the hypotheses for cell 515 served by TP C override the hypotheses for cell 517 served by TP H, the interference contribution from TP D is prioritized.

Furthermore, if time-multiplexing is used, TP D may be measured in the first measurement period in both cell 515 served by TP C and cell 517 served by TP H, and the measurement of the interference contribution from TP L in cell 517 served by TP H may be postponed until the second measurement period. It should also be noted that if there are several common interfering TPs, the cell in which the interfering TP has the largest interference impact is identified for each of the common interfering TPs and the interference hypotheses for the cell in which each common interfering TP has the largest impact will override the interference hypotheses for these interfering TPs in other cells.

In other words, in case different interference impact values, K, for the same TP has been determined in at least two different cells 515, 517 wherein the at least two cells 515, 517 are sharing the same interference signal transmission resources, i.e. the CSI-IM resources, in the radio communications network 100, the network node 110 may configure interference signal transmissions according to the largest of the different interference impact values, K, for the same TP determined in the at least two different cells 515, 517.

Also, in some embodiments, wherein the different interference impact values, K, for the same TP determined in the at least two different cells 515, 517 may be added together to form a single interference impact value, K, for the TP, the network node 110 may configure the interference signal transmissions based on the single interference impact value, K, for the TP. In this way, the network node 110 may determine a larger interference impact value, K, for common interfering TPs , since these may need to be prioritized.

Advantageously, it should further be noted that the CSI information gathered for the measured important interference hypotheses may then be used by the network node 110, for example, to improve the link adaptation to the wireless device 121, 122, 123, 124. Another advantage with the embodiments described herein for configuring interference signal transmissions from TPs is that it results in an increased system throughput for large populations of wireless devices across multiple cells with limited CSI resources available.

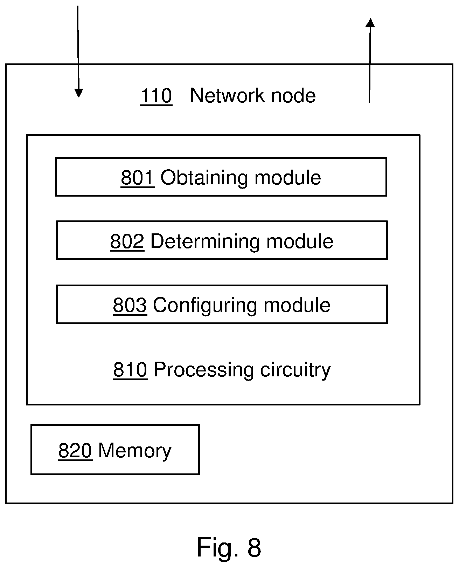

To perform the method actions in the network node 110 for configuring interference signal transmissions from TPs in a radio communications network 100, the network node 110 may comprise the following arrangement depicted in Figure 8.

**Figure 8** shows a schematic block diagram of embodiments of the network node 110. In some embodiments, the network node 110 may comprise an **obtaining module 801**, a **determining module 802**, and a **configuring module 803**. In some embodiments, the network node 110 may comprise a **processing circuitry 810**, which may also be referred to as processing module, processing unit or processor. The processing circuitry 810 may comprise one or more of the obtaining module 801, the determining module 802, and the configuring module 803, and/or perform the function thereof described below.

The network node 110 is configured to, e.g. by means of the obtaining module 801, obtain estimates indicative of the interference received by one or more wireless devices 121, 122, 123, 124 from the TPs. Also, the network node 110 is configured to, e.g. by means of the determining module 802, determine an interference impact value for at least one TP which correspond to the estimates indicative of the interference received by the one or more wireless devices 121, 122, 123, 124 from the at least one TP in relation to the estimates indicative of the interference received by the one or more wireless devices 121, 122, 123, 124 from other TPs of the TPs than the at least one TP. The network node 110 is further configured to, e.g. by means of the configuring module 803, configure interference signal transmissions from the TPs based on the at least one interference impact value.

In some embodiments, the obtained estimates indicative of the interference are based on measurement values of signals from the TPs determined by the one or more wireless devices 121, 122, 123, 124. In some embodiments, the obtained estimates indicative of the interference are path loss measurement values measured by the network node 110 on uplink signals from the one or more wireless devices 121, 122, 123, 124. In some embodiments, the obtained estimates indicative of the interference are Signal-to-Interference-plus-Noise-Ratios, SINRs, determined by the network node 110 based on Channel Quality Indicators, CQIs, received from the one or more wireless devices 121, 122, 123, 124 in Channel State Information, CSI, reports.

Furthermore, in some embodiments, the network node 110/the determining module 802 may be further configured to determine the interference impact value for the at least one TP by adding together, for each of the one or more wireless devices 121, 122, 123, 124, the relation between the estimates indicative of the interference received by one wireless device 121 from the at least one TP and the estimates indicative of the interference received by the same wireless device 121 from other TPs of the TPs than the at least one TP. In some embodiments, the scheduled interference signal transmissions are operative to cause a specific interference signal transmission pattern from the TPs on interference signal transmission resources, e.g. CSI-IM resources, configured for one or more wireless devices 121, 122, 123, 124.

In some embodiments, the network node 110/the configuring module 803 may also be configured to configure interference signal transmissions from the TPs by comparing interference impact values of at least two TPs, and configure the interference transmissions from the TPs according to the largest of the determined interference impact values.

In some embodiments, in case different interference impact values for the same TP has been determined in at least two different cells 416, 418 wherein the at least two cells 416, 418 are sharing the same interference signal transmission resources, e.g. CSI-IM resources, in the radio communications network 100, the network node 110/the configuring module 803 may be configured to configure interference signal transmissions from the TPs according to the largest of the different interference impact values for the same TP determined in the at least two different cells 416, 418. In this case, the network node 110/the configuring module 803 may also be configured to add together the different interference impact values for the same TP determined in the at least two different cells 416, 418 to form a single interference impact value for the TP, and configure interference signal transmissions from the TPs further based on the single interference impact value for the TP.

The embodiments for configuring interference signal transmissions from TPs may be implemented through one or more processors, such as, e.g. the processing circuitry 810 in the network node 110 depicted in Figure 8, together with computer program code for performing the functions and actions of the embodiments herein. The program code mentioned above may also be provided as a computer program product, for instance in the form of a data carrier carrying computer program code or code means for performing the embodiments herein when being loaded into the processing circuitry 810 in the network node 110. The computer program code may e.g. be provided as pure program code in the network node 110 or on a server and downloaded to the network node 110. The carrier may be one of an electronic signal, optical signal, radio signal, or computer readable storage medium, such as, e.g. electronic memories like a RAM, a ROM, a Flash memory, a magnetic tape, a CD-ROM, a DVD, a Blueray disc, etc.

Thus, the network node 110 may further comprise a **memory 820**, which may be referred to or comprise one or more memory modules or units. The memory 820 may be arranged to be used to store executable instructions and data, such as, e.g. received CSI reports, interference impact values, etc., to perform the methods described herein when being executed in the network node 110, the processing circuitry 810 and/or modules 801-803. Those skilled in the art will also appreciate that the processing circuitry 810 and the memory 820 described above may refer to a combination of analog and digital circuits, and/or one or more processors configured with software and/or firmware, e.g. stored in the memory 820, that when executed by the one or more processors, such as, the processing circuitry 810 and/or modules 801-803, cause the one or more processors to perform the method as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

From the above it may be seen that some embodiments may comprise a computer program product, comprising instructions which, when executed on at least one processor, e.g. the processing circuitry 810 or modules 801-803, cause the at least one processor to carry out the method for configuring interference signal transmissions from TPs. Also, some embodiments may further comprise a carrier containing said computer program, wherein the carrier is one of an electronic signal, optical signal, radio signal, or computer readable storage medium.

The terminology used in the detailed description of the particular exemplary embodiments illustrated in the accompanying drawings is not intended to be limiting of the described the method and the network node 110, which instead should be construed in view of the enclosed claims.

As used herein, the term "and/or" comprises any and all combinations of one or more of the associated listed items.

Further, as used herein, the common abbreviation "e.g.", which derives from the Latin phrase "exempli gratia," may be used to introduce or specify a general example or examples of a previously mentioned item, and is not intended to be limiting of such item. If used herein, the common abbreviation "i.e.", which derives from the Latin phrase "id est," may be used to specify a particular item from a more general recitation. The common abbreviation "etc.", which derives from the Latin expression "et cetera" meaning "and other things" or "and so on" may have been used herein to indicate that further features, similar to the ones that have just been enumerated, exist.

As used herein, the singular forms "a", "an" and "the" are intended to comprise also the plural forms as well, unless expressly stated otherwise. It will be further understood that the terms "includes," "comprises," "including" and/or "comprising," when used in this specification, specify the presence of stated features, actions, integers, steps, operations, elements, and/or components, but do not preclude the presence or addition of one or more other features, actions, integers, steps, operations, elements, components, and/or groups thereof.

Unless otherwise defined, all terms comprising technical and scientific terms used herein have the same meaning as commonly understood by one of ordinary skill in the art to which the described embodiments belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The embodiments herein are not limited to the above described preferred embodiments. Therefore, the above embodiments should not be construed as limiting.

## Claims

1. A method performed by a network node (110, 111, 112) for configuring interference signal transmissions from transmission points, TPs (B, C, D, E, F), in a radio communications network (100), the method comprising

   *obtaining* (201) estimates indicative of the interference received by one or more wireless devices (121, 122, 123, 124) from the TPs (B, C, D, E, F); wherein the method further comprises
   *determining* (202) an interference impact value, K, for at least one TP (B) which corresponds to the estimates indicative of the interference received by the one or more wireless devices (121, 122, 123, 124) from the at least one TP (B) in relation to the estimates indicative of the interference received by the one or more wireless devices (121, 122, 123, 124) from other TPs (C, D, E, F) of the TPs (B, C, D, E, F) than the at least one TP (B), wherein the interference impact value, K, for the at least one TP (B) is determined by calculating, for each of the one or more wireless devices (121, 122, 123, 124), a ratio of the estimates indicative of the interference received by one wireless device (121) from the at least one TP (B) to the sum of the estimates indicative of the interference received by the same wireless device (121) from other TPs (C, D, E, F) of the TPs (B, C, D, E, F) than the at least one TP (B) and adding together the calculated ratios; and
   *configuring* (203) interference signal transmissions from the TPs (B, C, D, E, F) based on the at least one interference impact value, K.

2. The method according to claim 1, wherein the obtained estimates indicative of the interference are based on Reference-Signal-Received-Power, RSRP, measurement values of signals from the TPs (B, C, D, E, F) determined and reported by the one or more wireless devices (121, 122, 123, 124).

3. The method according to claim 1, wherein the obtained estimates indicative of the interference are path loss measurement values measured by the network node (110, 111, 112) on uplink signals from the one or more wireless devices (121, 122, 123, 124).

4. The method according to claim 1, wherein the obtained estimates indicative of the interference are Signal-to-Interference-plus-Noise-Ratios, SINRs, determined by the network node (110, 111, 112) based on Channel Quality Indicators, CQIs, received from the one or more wireless devices (121, 122, 123, 124) in Channel State Information, CSI, reports.

5. The method according to any of claims 1-4, wherein the scheduled interference signal transmissions are operative to cause a specific interference signal transmission pattern from the TPs (B, C, D, E, F) on interference signal transmission resources, CSI-IM, configured for one or more wireless devices (121, 122, 123, 124).

6. A network node (110, 111, 112) for configuring interference signal transmissions from transmission points, TPs (B, C, D, E, F), in a radio communications network (100), the network node (110, 111, 112) being configured to obtain estimates indicative of the interference received by one or more wireless devices (121, 122, 123, 124) from the TPs (B, C, D, E, F), wherein the network node is further configured to:

determine an interference impact value, K, for at least one TP (B) which corresponds to the estimates indicative of the interference received by the one or more wireless devices (121, 122, 123, 124) from the at least one TP (B) in relation to the estimates indicative of the interference received by the one or more wireless devices (121, 122, 123, 124) from other TPs (C, D) of the TPs (B, C, D, E, F) than the at least one TP (B),

determine the interference impact value, K, for the at least one TP (B) by calculating, for each of the one or more wireless devices (121, 122, 123, 124), a ratio of the estimates indicative of the interference received by one wireless device (121) from the at least one TP (B) to the sum of the estimates indicative of the interference received by the same wireless device (121) from other TPs (C, D, E, F) of the TPs (B, C, D, E, F) than the at least one TP (B) and adding together the calculated ratios, and

configure interference signal transmissions from the TPs (B, C, D, E, F) based on the at least one interference impact value, K.

7. The network node (110, 111, 112) according to claim 6, further configured to obtain the estimates indicative of the interference are based on Reference-Signal-Received-Power, RSRP, measurement values of signals from the TPs (B, C, D, E, F) determined by the one or more wireless devices (121, 122, 123, 124).

8. The network node (110, 111, 112) according to claim 6, further configured to obtain the estimates indicative of the interference are path loss measurement values measured by the network node (110, 111, 112) on uplink signals from the one or more wireless devices (121, 122, 123, 124).

9. The network node (110, 111, 112) according to claim 6, further configured to obtain the estimates indicative of the interference are Signal-to-Interference-plus-Noise-Ratios, SINRs, determined by the network node (110, 111, 112) based on Channel Quality Indicators, CQIs, received from the one or more wireless devices (121, 122, 123, 124) in Channel State Information, CSI, reports.

10. The network node (110, 111, 112) according to any of claims 6-9, wherein the configured interference signal transmissions are operative to cause a specific interference signal transmission pattern from the TPs (B, C, D, E, F) on interference signal transmission resources, CSI-IM, configured for one or more wireless devices (121, 122, 123, 124).

11. The network node (110, 111, 112) according to any of claims 6-10, further configured to configure interference signal transmissions from the TPs (B, C, D, E, F) by comparing interference impact values, K, of at least two TPs, and configure the interference transmissions from the TPs (B, C, D, E, F) according to the largest of the determined interference impact values, K.

12. The network node (110, 111, 112) according to any of claims 6-11, further configured to, in case different interference impact values, K, for the same TP (D) has been determined in at least two different cells (515, 517) wherein the at least two cells (515, 517) are sharing the same interference signal transmission resources, CSI-IM, in the radio communications network (100), configure the interference signal transmissions from the TPs (B, C, D, E, F) according to the largest of the different interference impact values, K, for the same TP (D) determined in the at least two different cells (515, 517).

13. The network node (110, 111, 112) according to claim 12, further configured to add together the different interference impact values, K, for the same TP (D) determined in the at least two different cells (515, 517) to form a single interference impact value, K, for the TP (D), and configure the interference signal transmissions from the TPs (B, C, D, E, F) further based on the single interference impact value, K, for the TP (D).

**Patentansprüche**

1. Verfahren, das von einem Netzknoten (110, 111, 112) zur Konfiguration von Interferenzsignalübertragungen von Übertragungspunkten, TPs (B, C, D, E, F), in einem Funkkommunikationsnetz (100) durchgeführt wird, wobei das Verfahren Folgendes umfasst

*Erhalten* von (201) Schätzungen, die auf die Interferenz hinweisen, die von einer oder mehreren drahtlosen Vorrichtungen (121, 122, 123, 124) von den TPs (B, C, D, E, F) empfangen wird;

wobei das Verfahren ferner Folgendes umfasst

*Bestimmen* (202) eines Interferenzeinflusswertes, K, für mindestens einen TP (B), der den Schätzungen entspricht, die auf die von der einen oder mehreren drahtlosen Vorrichtungen (121, 122, 123, 124) von dem mindestens einen TP (B) empfangene Interferenz hinweisen, in Bezug auf die Schätzungen, die auf die Interferenz hinweisen, die von der einen oder mehreren drahtlosen Vorrichtungen (121, 122, 123, 124) von anderen TPs (C, D, E, F) der TPs (B, C, D, E, F) als von dem mindestens einen TP (B) empfangen wird, wobei der Interferenzeinflusswert, K, für den mindestens einen TP (B) bestimmt wird, indem für jede der einen oder mehreren drahtlosen Vorrichtungen (121, 122, 123, 124) ein Verhältnis der Schätzungen berechnet wird, das auf die von einer drahtlosen Vorrichtung (121) von dem mindestens einen TP (B) empfangene Interferenz hinweist, zu der Summe der Schätzungen, die auf die Interferenz hinweisen, die von derselben drahtlosen Vorrichtung (121) von anderen TPs (C, D, E, F) der TPs (B, C, D, E, F) als dem mindestens einen TP (B) empfangen wird, und Zusammenaddieren der berechneten Verhältniswerte; und

*Konfigurieren* (203) von Interferenzsignalübertragungen von den TPs (B, C, D, E, F) basierend auf dem mindestens einen Interferenzeinflusswert, K.

2. Verfahren nach Anspruch 1, wobei die erhaltenen Schätzungen, die auf die Interferenz hinweisen, auf Messwerten der Referenzsignalempfangsleistung, RSRP, von Signalen aus den TPs (B, C, D, E, F) basieren, die von der einen oder mehreren drahtlosen Vorrichtungen (121, 122, 123, 124) bestimmt und gemeldet werden.

3. Verfahren nach Anspruch 1, wobei die erhaltenen Schätzungen, die auf die Interferenz hinweisen, Wegverlustmesswerte sind, die von dem Netzknoten (110, 111, 112) an Uplink-Signalen von der einen oder mehreren drahtlosen Vorrichtungen (121, 122, 123, 124) gemessen werden.

4. Verfahren nach Anspruch 1, wobei die erhaltenen Schätzungen, die auf die Interferenz hinweisen, Signal-zu-Interferenz plus Rauschen-Verhältnisse, SINRs, sind, die durch den Netzknoten (110, 111, 112) basierend auf Kanalqualitätsanzeigen, CQIs, bestimmt werden, die von der einen oder mehreren drahtlosen Vorrichtungen (121, 122, 123, 124) in Berichten der Kanalzustandsinformationen, CSI, empfangen werden.

5. Verfahren nach einem der Ansprüche 1 bis 4, wobei die geplanten Interferenzsignalübertragungen wirksam sind, um ein spezifisches Interferenzsignalübertragungsmuster von den TPs (B, C, D, E, F) auf Interferenzsignalübertragungsressourcen, CSI-IM, zu bewirken, die für eine oder mehrere drahtlose Vorrichtungen (121, 122, 123, 124) konfiguriert sind.

6. Netzknoten (110, 111, 112) zur Konfiguration von Interferenzsignalübertragungen von Übertragungspunkten, TPs, (B, C, D, E, F), in einem Funkkommunikationsnetz (100),
wobei der Netzknoten (110, 111, 112) konfiguriert ist, um Schätzungen zu erhalten, die auf die von einer oder mehreren drahtlosen Vorrichtungen (121, 122, 123, 124) von den TPs (B, C, D, E, F) empfangenen Interferenz hinweisen, wobei der Netzknoten ferner konfiguriert ist zum:

Bestimmen eines Interferenzeinflusswertes, K, für mindestens einen TP (B), der den Schätzungen entspricht, die auf die von der einen oder mehreren drahtlosen Vorrichtungen (121, 122, 123, 124) von dem mindestens einen TP (B) empfangene Interferenz hinweisen in Bezug auf die Schätzungen, die auf die von der einen oder mehreren drahtlosen Vorrichtungen (121, 122, 123, 124) von anderen TPs (C, D) der TPs (B, C, D, E, F) als dem mindestens einen TP (B) empfangenen Interferenzen hinweisen, entspricht,
Bestimmen des Interferenzeinflusswertes, K, für das mindestens eine TP (B) durch Berechnen, für jede der einen oder mehreren drahtlosen Vorrichtungen (121, 122, 123, 124), eines Verhältnisses der Schätzungen, die auf die von einer drahtlosen Vorrichtung (121) von dem mindestens einen TP (B) empfangene Interferenz hinweisen, zur Summe der Schätzungen, die auf die Interferenz hinweisen, die von derselben drahtlosen Vorrichtung (121) von anderen TPs (C, D, E, F) der TPs (B, C, D, E, F) als dem mindestens einen TP (B) empfangen wird, und Zusammenaddieren der berechneten Verhältniswerte, und
Konfigurieren von Interferenzsignalübertragungen von den TPs (B, C, D, E, F) basierend auf dem mindestens einen Interferenzeinflusswert, K.

7. Netzknoten (110, 111, 112) nach Anspruch 6, ferner konfiguriert zum Erhalten der Schätzungen, die auf die Interferenz hinweisen, basierend auf Messwerten der Referenzsignalempfangsleistung, RSRP, von Signalen aus den TPs (B, C, D, E, F), die von der einen oder mehreren drahtlosen Vorrichtungen (121, 122, 123, 124) bestimmt werden.

8. Netzknoten (110, 111, 112) nach Anspruch 6, ferner konfiguriert zum Erhalten der Schätzungen, die auf die Interferenz hinweisen, die Wegverlustmesswerte sind, die von dem Netzknoten (110, 111, 112) an Uplink-Signalen von der einen oder mehreren drahtlosen Vorrichtungen (121, 122, 123, 124) gemessen werden.

9. Netzknoten (110, 111, 112) nach Anspruch 6, ferner konfiguriert zum Erhalten der Schätzungen, die auf die Interferenz hinweisen, die Signal-zu-Interferenz plus Rauschen-Verhältnisse, SINRs, sind, die durch den Netzknoten (110, 111, 112) basierend auf Kanalqualitätsanzeigen, CQIs, bestimmt werden, die von der einen oder mehreren drahtlosen Vorrichtungen (121, 122, 123, 124) in Berichten der Kanalzustandsinformationen, CSI, empfangen werden.

10. Netzknoten (110, 111, 112) nach einem der Ansprüche 6 bis 9, wobei die konfigurierten Interferenzsignalübertragungen wirksam sind, um ein spezifisches Interferenzsignalübertragungsmuster von den TPs (B, C, D, E, F) auf Interferenzsignalübertragungsressourcen, CSI-IM, zu bewirken, die für eine oder mehrere drahtlose Vorrichtungen (121, 122, 123, 124) konfiguriert sind.

11. Netzknoten (110, 111, 112) nach einem der Ansprüche 6 bis 10, ferner konfiguriert zum Konfigurieren von Interferenzsignalübertragungen von den TPs (B, C, D, E, F) durch Vergleichen von Interferenzeinflusswerten, K, von mindestens zwei TPs, und Konfigurieren der Interferenzübertragungen von den TPs (B, C, D, E, F) entsprechend dem größten der bestimmten Interferenzeinflusswerte, K.

12. Netzknoten (110, 111, 112) nach einem der Ansprüche 6 bis 11, ferner konfiguriert, um, falls unterschiedliche Interferenzeinflusswerte, K, für den gleichen TP (D) in mindestens zwei verschiedenen Zellen (515, 517) bestimmt wurden, wobei die mindestens zwei Zellen (515, 517) die gleichen Interferenzsignalübertragungsressourcen, CSI-IM, im Funkkommunikationsnetz (100) teilen, die Interferenzsignalübertragungen von den TPs (B, C, D, E, F) entsprechend dem größten der verschiedenen Interferenzeinflusswerte, K, für den gleichen TP (D), der in den mindestens zwei verschiedenen Zellen (515, 517) bestimmt wird, zu konfigurieren.

13. Netzknoten (110, 111, 112) nach Anspruch 12, ferner konfiguriert, um die verschiedenen Interferenzeinflusswerte, K, für denselben TP (D), der in den mindestens zwei verschiedenen Zellen (515, 517) bestimmt wird, zusammen zu addieren, um einen einzigen Interferenzeinflusswert, K, für den TP (D) zu bilden, und um die Interferenzsignalübertragungen von den TPs (B, C, D, E, F) weiterhin basierend auf dem einzelnen Interferenzeinflusswert, K, für den TP (D) zu konfigurieren.

**Revendications**

1. Procédé mis en oeuvre par un noeud de réseau (110, 111, 112) pour configurer des transmissions de signal d'interférence à partir de points de transmission, TP (B, C, D, E, F), dans un réseau de communications radio (100), le procédé comprenant
l'*obtention* (201) d'estimations indicatives de l'interférence reçue par un ou plusieurs dispositifs sans fil (121, 122, 123, 124) depuis les TP (B, C, D, E, F) ;
dans lequel le procédé comprend en outre
la *détermination* (202) d'une valeur d'impact d'interférence, K, pour au moins un TP (B) qui correspond aux estimations indicatives de l'interférence reçue par le ou les dispositifs sans fil (121, 122, 123, 124) depuis l'au moins un TP (B) par rapport aux estimations indicatives de l'interférence reçue par le ou les dispositifs sans fil (121, 122, 123, 124) depuis d'autres TP (C, D, E, F) des TP (B, C, D, E, F) que l'au moins un TP (B), dans lequel la valeur d'impact d'interférence, K, pour l'au moins un TP (B) est déterminée en calculant, pour chacun parmi le ou les dispositifs sans fil (121, 122, 123, 124), un rapport des estimations indicatives de l'interférence reçue par un dispositif sans fil (121) depuis l'au moins un TP (B) à la somme des estimations indicatives de l'interférence reçue par le même dispositif sans fil (121) depuis d'autres TP (C, D, E, F) des TP (B, C, D, E, F) que l'au moins un TP (B) et l'addition des rapports calculés ; et
la *configuration* (203) de transmissions de signal d'interférence depuis les TP (B, C, D, E, F) sur la base de l'au moins une valeur d'impact d'interférence, K.

2. Procédé selon la revendication 1, dans lequel les estimations indicatives de l'interférence obtenues sont basées sur des valeurs de mesure de puissance reçue de signal de référence, RSRP, de signaux provenant des TP (B, C, D, E, F) déterminées et déclarées par le ou les dispositifs sans fil (121, 122, 123, 124).

3. Procédé selon la revendication 1, dans lequel les estimations indicatives de l'interférence obtenues sont des valeurs de mesure d'affaiblissement de propagation mesurées par le noeud de réseau (110, 111, 112) sur des signaux de liaison montante depuis le ou les dispositifs sans fil (121, 122, 123, 124).

**4.** Procédé selon la revendication 1, dans lequel les estimations indicatives de l'interférence obtenues sont des rapports signal-bruit plus interférence, SINR, déterminés par le noeud de réseau (110, 111, 112) sur la base d'indicateurs de qualité de canal, CQI, reçus depuis le ou les dispositifs sans fil (121, 122, 123, 124) dans des rapports d'information d'état de canal, CSI.

**5.** Procédé selon l'une quelconque des revendications 1 à 4, dans lequel les transmissions de signal d'interférence planifiées sont opérationnelles pour provoquer un motif spécifique de transmission de signal d'interférence depuis les TP (B, C, D, E, F) sur des ressources de transmission de signal d'interférence, CSI-IM, configurées pour un ou plusieurs dispositifs sans fil (121, 122, 123, 124).

**6.** Noeud de réseau (110, 111, 112) pour configurer des transmissions de signal d'interférence à partir des points de transmission, TP (B, C, D, E, F), dans un réseau de communications radio (100),
le noeud de réseau (110, 111, 112) étant configuré pour obtenir des estimations indicatives de l'interférence reçue par un ou plusieurs dispositifs sans fil (121, 122, 123, 124) depuis les TP (B, C, D, E, F), dans lequel le noeud de réseau est en outre configuré pour :

déterminer une valeur d'impact d'interférence, K, pour au moins un TP (B) qui correspond aux estimations indicatives de l'interférence reçue par le ou les dispositifs sans fil (121, 122, 123, 124) depuis l'au moins un TP (B) par rapport aux estimations indicatives de l'interférence reçue par le ou les dispositifs sans fil (121, 122, 123, 124) depuis d'autres TP (C, D) des TP (B, C, D, E, F) que l'au moins un TP (B),
déterminer la valeur d'impact d'interférence, K, pour l'au moins un TP (B) en calculant, pour chacun parmi le ou les dispositifs sans fil (121, 122, 123, 124), un rapport des estimations indicatives de l'interférence reçue par un dispositif sans fil (121) depuis l'au moins un TP (B) à la somme des estimations indicatives de l'interférence reçue par le même dispositif sans fil (121) depuis d'autres TP (C, D, E, F) des TP (B, C, D, E, F) que l'au moins un TP (B) et l'addition des rapports calculés, et
configurer des transmissions de signal d'interférence depuis les TP (B, C, D, E, F) sur la base de l'au moins une valeur d'impact d'interférence, K.

**7.** Noeud de réseau (110, 111, 112) selon la revendication 6, configuré en outre pour obtenir les estimations indicatives de l'interférence basées sur des valeurs de mesure de puissance reçue de signal de référence, RSRP, de signaux provenant des TP (B, C, D, E, F) déterminées par le ou les dispositifs sans fil (121, 122, 123, 124).

**8.** Noeud de réseau (110, 111, 112) selon la revendication 6, configuré en outre pour obtenir les estimations indicatives de l'interférence qui sont des valeurs de mesure d'affaiblissement de propagation mesurées par le noeud de réseau (110, 111, 112) sur des signaux de liaison montante depuis le ou les dispositifs sans fil (121, 122, 123, 124).

**9.** Noeud de réseau (110, 111, 112) selon la revendication 6, configuré en outre pour obtenir les estimations indicatives de l'interférence obtenues qui sont des rapports signal-bruit plus interférence, SINR, déterminés par le noeud de réseau (110, 111, 112) sur la base d'indicateurs de qualité de canal, CQI, reçus depuis le ou les dispositifs sans fil (121, 122, 123, 124) dans des rapports d'information d'état de canal, CSI.

**10.** Noeud de réseau (110, 111, 112) selon l'une quelconque des revendications 6 à 9, dans lequel les transmissions de signal d'interférence configurées sont opérationnelles pour provoquer un motif spécifique de transmission de signal d'interférence depuis les TP (B, C, D, E, F) sur des ressources de transmission de signal d'interférence, CSI-IM, configurées pour un ou plusieurs dispositifs sans fil (121, 122, 123, 124).

**11.** Noeud de réseau (110, 111, 112) selon l'une quelconque des revendications 6 à 10, configuré en outre pour configurer des transmissions de signal d'interférence depuis les TP (B, C, D, E, F) en comparant des valeurs d'impact d'interférence, K, d'au moins deux TP, et configurer les transmissions d'interférence depuis les TP (B, C, D, E, F) selon la plus grande des valeurs d'impact d'interférence, K, déterminées.

**12.** Noeud de réseau (110, 111, 112) selon l'une quelconque des revendications 6 à 11, configuré en outre pour, dans le cas où des valeurs d'impact d'interférence, K, différentes pour le même TP (D) ont été déterminées dans au moins deux cellules différentes (515, 517) dans lequel les au moins deux cellules (515, 517) partagent les mêmes ressources de transmission de signal d'interférence, CSI-IM, dans le réseau de communications radio (100), configurer les transmissions de signal d'interférence depuis les TP (B, C, D, E, F) selon la plus grande des valeurs d'impact d'interférence, K, différentes pour le même TP (D) déterminées dans les au moins deux cellules différentes (515, 517).

**13.** Noeud de réseau (110, 111, 112) selon la revendication 12, configuré en outre pour additionner les différentes valeurs d'impact d'interférence, K, pour le même TP (D) déterminées dans les au moins deux cellules différentes (515, 517) pour former une valeur d'impact d'interférence, K, unique pour le TP (D), et configurer les transmissions de signal d'interférence depuis les TP (B, C, D, E, F) sur la base en outre de la valeur d'impact d'interférence, K, unique pour le TP (D).

Fig. 1

```
                            ┌─────────┐
                            │  Start  │
                            └────┬────┘
                                 │
                                 ▼
    ┌──────────────────────────────────────────────────────────────┐
    │  201. Obtaining estimates indicative of interference          │
    │                 received by UEs from TPs                      │
    └────────────────────────────┬─────────────────────────────────┘
                                 │
                                 ▼
    ┌──────────────────────────────────────────────────────────────┐
    │  202. Determining an interference impact value, K, for at     │
    │                    least one TPs                              │
    └────────────────────────────┬─────────────────────────────────┘
                                 │
                                 ▼
    ┌──────────────────────────────────────────────────────────────┐
    │  203. Configuring interference transmissions from the TPs     │
    │          based on the interference impact value K             │
    └────────────────────────────┬─────────────────────────────────┘
                                 │
                                 ▼
                            ┌─────────┐
                            │   End   │
                            └─────────┘
```

Fig. 2

Fig. 3

EP 3 158 660 B1

| A | | 1st measurement period | | | | |
|---|---|---|---|---|---|---|
| CSI-IM | A | B | C | D | E | F |
| 1 | 0 | $X_B$ | $X_C$ | $X_D$ | $X_E$ | $X_F$ |
| 2 | 0 | $\sim X_B$ | $X_C$ | $X_D$ | $X_E$ | $X_F$ |
| 3 | 0 | $X_B$ | $\sim X_C$ | $X_D$ | $X_E$ | $X_F$ |

Fig. 4A

| A | | 1st measurement period | | | | |
|---|---|---|---|---|---|---|
| CSI-IM | A | B | C | D | E | F |
| 1 | 0 | $X_B$ | $X_C$ | $X_D$ | $X_E$ | $X_F$ |
| 2 | 0 | $X_B$ | $\sim X_C$ | $X_D$ | $X_E$ | $X_F$ |
| 3 | 0 | $X_B$ | $X_C$ | $\sim X_D$ | $X_E$ | $X_F$ |

Fig. 4B

21

EP 3 158 660 B1

TP C

TP D

TP H

121

122

123

124

515

516

517

500

Fig. 5

**Fig. 6**

| C | 1st measurement period | | | | | | 2nd measurement period | | | | | |
|---|---|---|---|---|---|---|---|---|---|---|---|---|
| CSI-IM | C | B | D | F | A | G | C | B | D | F | A | G |
| 1 | 0 | $X_B$ | $X_D$ | $X_F$ | $X_A$ | $X_G$ | 0 | $X_B$ | $X_D$ | $X_F$ | $X_A$ | $X_G$ |
| 2 | 0 | $\sim X_B$ | $X_D$ | $X_F$ | $X_A$ | $X_G$ | 0 | $X_B$ | $X_D$ | $\sim X_F$ | $X_A$ | $X_G$ |
| 3 | 0 | $X_B$ | $\sim X_D$ | $X_F$ | $X_A$ | $X_G$ | 0 | $X_B$ | $X_D$ | $X_F$ | $\sim X_A$ | $X_G$ |

**Fig. 7A**

| H | 1st measurement period | | | | | | 2nd measurement period | | | | | |
|---|---|---|---|---|---|---|---|---|---|---|---|---|
| CSI-IM | H | J | L | D | K | I | H | J | L | D | K | I |
| 1 | 0 | $X_J$ | $X_L$ | $X_D$ | $X_K$ | $X_I$ | 0 | $X_J$ | $X_L$ | $X_D$ | $X_K$ | $X_I$ |
| 2 | 0 | $\sim X_J$ | $X_L$ | $X_D$ | $X_K$ | $X_I$ | 0 | $X_J$ | $X_L$ | $\sim X_D$ | $X_K$ | $X_I$ |
| 3 | 0 | $X_J$ | $\sim X_L$ | $X_D$ | $X_K$ | $X_I$ | 0 | $X_J$ | $X_L$ | $X_D$ | $\sim X_K$ | $X_I$ |

**Fig. 7B**

| H | 1st measurement period | | | | | | 2nd measurement period | | | | | |
|---|---|---|---|---|---|---|---|---|---|---|---|---|
| CSI-IM | H | J | L | D | K | I | H | J | L | D | K | I |
| 1 | 0 | $X_J$ | $X_L$ | $X_D$ | $X_K$ | $X_I$ | 0 | $X_J$ | $X_L$ | $X_D$ | $X_K$ | $X_I$ |
| 2 | 0 | $\sim X_J$ | $\sim X_L$ | $\sim X_D$ | $X_K$ | $X_I$ | 0 | $X_J$ | $\sim X_L$ | $X_D$ | $X_K$ | $X_I$ |
| 3 | 0 | $X_J$ | $X_L$ | $X_D$ | $X_K$ | $X_I$ | 0 | $X_J$ | $X_L$ | $X_D$ | $\sim X_K$ | $X_I$ |

**110 Network node**

**801 Obtaining module**

**802 Determining module**

**803 Configuring module**

**810 Processing circuitry**

**820 Memory**

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2013029657 A1

**Non-patent literature cited in the description**

• **MOTOROLA MOBILITY.** CQI Definition for CoMP. *3GPP DRAFT; R1-123791*

• **ERICSSON et al.** CoMP Network Operation Utilizing UE Emulated Interferance. *3GPP DRAFT; R1-123826*